# EUROPÄISCHE PATENTSCHRIFT

(11) **EP 4 468 760 B1**
(45) Veröffentlichungstag und Bekanntmachung des Hinweises auf die Patenterteilung: **18.02.2026**
(21) Anmeldenummer: 24171180.3
(22) Anmeldetag: 19.04.2024
(51) Int. Cl.: H04W 4/80, D06F 33/32, D06F 33/52, D06F 34/05, D06F 93/00

(54) **TRACKING-SYSTEM UND VERFAHREN ZUM NACHVERFOLGEN EINES MITTELS ELEKTROMAGNETISCHER SIGNALE TRACKING-FÄHIGEN OBJEKTES**
TRACKING SYSTEM AND METHOD FOR TRACKING AN OBJECT WHICH CAN BE TRACKED USING ELECTROMAGNETIC SIGNALS
SYSTÈME ET PROCÉDÉ DE SUIVI POUR SUIVRE UN OBJET EN FONCTION DU SUIVI DE SIGNAUX ÉLECTROMAGNÉTIQUES

(30) Priorität: 26.05.2023 DE 102023113866
(43) Veröffentlichungstag der Anmeldung: 27.11.2024
(73) Patentinhaber: Miele & Cie. KG, 33332 Gütersloh (DE)
(72) Erfinder: Sladek, Kamil P, 30952 Ronnenberg (DE)

(56) Entgegenhaltungen:
- WO-A1-2022/039367
- US-A1- 2020 125 905
- US-A1- 2020 378 684

## Beschreibung

Die Erfindung betrifft ein Tracking-System und ein Verfahren zum Nachverfolgen eines mittels elektromagnetischer Signale tracking-fähigen Objektes.

Lokalisierung und Tracking von Personen oder Objekten in Innen- oder Außenräumen unter Einsatz elektromagnetischer Strahlung für UWB (Ultrabreitband)- oder Bluetooth-Tags sind bekannt.

Ferner ist ein Verfahren zur Reinigung von Objekten mittels Trackings von Objekten wie Wäschestücken und/oder Instrumenten anhand von RFID (Radio Frequency Identification)-Tags bekannt, bei dem die mit RFID-Tag versehenen Objekte räumlich hinreichend nahe an RFID-Lesegeräten vorbeigeführt und registriert werden. Die Nutzung von RFID ist auf das Zusammenspiel der RFID-Tags mit RFID-Lesegeräten angewiesen. Im Fall einer Wäschepflege, bei dem die zu behandelnden Objekte, d.h. die zu behandelnde Wäsche verschiedene Behandlungsstationen mit mindestens einer Behandlungseinheit in Form von Waschmaschine, Spüler, Wäschetrockner, Trockenschrank, Wäschekorb, Regal, etc. durchläuft, muss das zu trackende Objekt an dem jeweiligen externen Lesegerät der Behandlungsstationen oder -einheiten vorbeigeführt werden, um es zu registrieren. Alternativ kann die Ausleseelektronik in die jeweiligen Behandlungsstationen oder -einheiten eingebaut sein, um die RFID-Tags an dem jeweiligen Bestimmungsort der zu trackenden Objekte zu registrieren. Dies erfordert jedoch zusätzliche Elektronik in jeder der Behandlungsstationen und/oder -einheiten sowie die Übermittlung der erfassten Posten-Daten an ein zentrales System oder zwischen den Behandlungsstationen und/oder -einheiten, was wiederum eine Vernetzung voraussetzt. Ein solches System ist daher material- und kostenintensiv. US 2020/378684, WO 2022/039367 und US 2020/125905 gelten als Stand der Technik.

Die Erfindung wird durch die beigefügten Ansprüche definiert.

Der Erfindung stellt sich somit das Problem, ein Tracking-System und ein Verfahren zum Nachverfolgen eines mittels elektromagnetischer Signale tracking-fähigen Objektes bereitzustellen, mittels denen tracking-fähige Objekte in einem Behandlungsprozess nachverfolgt werden können und die material- und kostengünstig sind.

Erfindungsgemäß wird dieses Problem durch ein Tracking-System mit den Merkmalen des Patentanspruchs 1 und ein Verfahren mit den Merkmalen des Patentanspruchs 7 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben der Material- und Kostenreduktion darin, dass die jeweiligen Behandlungsstationen und/oder -einheiten über keine eigene Ausleseelektronik verfügen müssen, so dass die Behandlungsstationen und/oder -einheiten unverändert bleiben. Insbesondere weisen sie keine Ausleseelektronik für Tags auf. Auch der Nutzer selbst muss mit keinem Auslesegerät interagieren. Das Tracking verursacht keine zusätzlichen Arbeitsschritte für den Nutzer in dem Behandlungsprozess der tracking-fähigen Objekte und verläuft für ihn weitestgehend unsichtbar und unbemerkt im Hintergrund. Jegliche Behandlung der tracking-fähigen Objekte in den Behandlungsstationen und/oder -einheiten, die stationäre Behandlungs-Positionen im Raum aufweisen können, können anhand einer Positionsbestimmung ohne zusätzliche Anforderungen an ggf. bereits vorhandene Gerätetechnik in dem Behandlungsprozess nachverfolgt werden. Technische Verbesserungen der Tracking-Technik können ohne Modifikation der Maschinentechnik der Behandlungsstation oder -einheit umgesetzt werden. Die Behandlungsstationen und/-einheiten können stationär oder beweglich sein. Im Falle der Wäsche- und/oder Instrumentenpflege stellen insbesondere z.B. Waschmaschinen, Spülmaschinen, (Wasch-)Trockner, Bügelstationen, Mangeln, Regale, Schränke stationäre Behandlungsstationen und/oder -einheiten dar. Bewegliche Behandlungsstationen und/oder - einheiten stellen z.B. Transporteinrichtungen, Behälter z.B. für Waschmittel dar. Die beweglichen Behandlungsstationen und/oder -einheiten können alternativ auch als tracking-fähiges Objekt ausgebildet sein, wenn sie dementsprechend ein Tag enthalten, so dass sie in diesem Fall weder eine Behandlungsstation noch eine Behandlungseinheit darstellen.

Darüber hinaus haben die tracking-fähigen Objekte, die mit entsprechenden Tags z.B. auf UWB- und/oder BLE (Bluetooth Low Energy)-Basis versehen sind, die Eigenschaft, dass sie auch außerhalb des Behandlungsprozesses lokalisiert und verfolgt werden könnten. Beispielsweise kann die Objekt-Position von Feuerwehrmännern am Einsatzort in Gebäuden nachverfolgt werden, wenn z.B. Feuerwehrhelme und ggf. weitere Feuerwehrausrüstung mit entsprechenden Tags versehen sind. Bei Reinigungstextilien von Gebäudereinigern kann die Lokalisierung der angebrachten Tags dafür genutzt werden, um z.B. den Reinigungsverlauf von Bodenflächen nachzuvollziehen, beispielsweise welcher Wischmopp für welchen Boden verwendet wurde und ob der Boden vollflächig gewischt worden ist.

Die mindestens eine Behandlungsstation ist bevorzugt eine Reinigungs-, Aufbereitungs- oder Lagerungsstation zum Reinigen, Aufbereiten oder Lagern des tracking-fähigen Objektes. Die mindestens eine Behandlungsstation weist mindestens eine Behandlungseinheit auf. Die mindestens eine Behandlungsstation weist bevorzugt eine oder mehrere Behandlungseinheiten des gleichen Typs auf. Die mindestens eine Behandlungseinheit ist z.B. eine Waschmaschine, ein Wäschetrockner, ein Trockenschrank, eine Mangel, ein Bügelsystem, ein Spülgerät, ein Desinfektor, ein Regal etc. Die diesen Behandlungseinheiten zugeordneten Behandlungsstationen sind z.B. Reinigungs-, Aufbereitungs- und Lagerstationen wie Wasch-, Bügel-, Trocken-, Aufbewahrungsstationen etc.

Das tracking-fähige Objekt ist z.B. ein Wäschestück, ein persönliches Schutzausrüstungsstück wie ein Helm, Handschuhe, Stiefel sowie medizinische Instrumente, etc. Das tracking-fähige Objekt kann auch ein Verbrauchsmittel beispielsweise in Form eines Behälters mit integriertem Tag sein. Der Behälter enthält z.B. Waschmittel, so dass es vorteilhaft ist, dieses zu lokalisieren und nachzuverfolgen, insbesondere wenn es in den Innenraum eingebracht wird und/oder ihn verlässt. Das tracking-fähige Objekt ist bevorzugt mit einem Tracking-fähigen Tag versehen. Bevorzugt ist es UWB- und/oder BLE-fähig.

Die Erfindung betrifft ein Tracking-System zum räumlichen Nachverfolgen tracking-fähiger Objekte mittels elektromagnetischer Signale in einem Innenraum mit mindestens einer Behandlungsstation aufweisend jeweils mindestens eine Behandlungseinheit, wobei das System eine Vorrichtung aufweist, die in dem Innenraum extern zu der mindestens einen Behandlungsstation und der mindestens einen Behandlungseinheit angeordnet und ausgebildet und eingerichtet ist, die Anwesenheit der tracking-fähigen Objekte im Innenraum mittels elektromagnetischer Signale zu erkennen und deren Objekt-Position räumlich zu bestimmen und anhand der bestimmten Objekt-Position und einer dem Tracking-System bekannten Behandlungs-Position der mindestens einen Behandlungsstation und/oder -einheit im Innenraum ein Bewegungsprofil, eine Verweildauer und/oder eine jeweilige Behandlung der tracking-fähigen Objekte in der mindestens einen Behandlungsstation und/oder Behandlungseinheit abzuleiten.

Die Vorrichtung zur Erkennung und Positionsbestimmung des Tags ist z.B. als eine zentrale, zu der mindestens einen Behandlungsstation und -einheit externe und stationäre Einheit ausgebildet. Sie ist z.B. ausgebildet, an einer Decke des Innenraums angebracht zu werden bzw. sein. Alternativ können auch mehrere externe Einheiten genutzt werden. Dadurch kann ggf. die Positionsbestimmung verbessert oder größere Räume hinsichtlich der verfügbaren Reichweite ganzheitlich abgedeckt werden. Der Begriff "extern" bedeutet im Sinne der Erfindung, dass die Vorrichtung nicht in die mindestens eine Behandlungsstation oder -einheit integriert ist. Hierdurch muss die mindestens eine Behandlungsstation oder -einheit keine besonderen Voraussetzungen für das Tracking der tracking-fähigen Objekte erfüllen. Lediglich ihre Behandlungs-Position im Innenraum muss ausreichend unterscheidbar sein. Dadurch, dass in die Behandlungsstationen und -einheiten nicht jeweils eine Ausleseeinheit integriert ist, werden Elektronik und Kosten eingespart.

Das Tracking-System weist neben der Vorrichtung bevorzugt eine Rechnereinheit mit einer Anzeigeeinheit auf, so dass dem Nutzer ermöglicht wird, sich die von der Vorrichtung abgeleiteten Daten auf einfache Weise anzeigen zu lassen.

Die Kommunikation zwischen den Tags und der Vorrichtung erfolgt bevorzugt durch UWB-Technologie und/oder Bluetooth-Low-Energy (BLE)-Technologie. Mit beiden Technologien ist die Positionsbestimmung der Tags im Innenraum in jeweils zufriedenstellender Ausprägung und Genauigkeit möglich.

In einer bevorzugten Ausführungsform ist das Tracking-System mit der Vorrichtung ausgebildet und eingerichtet, die Behandlungs-Position der mindestens einen Behandlungsstation und/oder -einheit im Innenraum initial zu erlernen, wobei die Vorrichtung die Behandlungs-Position über ein tracking-fähiges Gerät ausliest, das im Bereich der mindestens einen Behandlungsstation und -einheit positioniert ist. Die Verknüpfung der mindestens einen Behandlungsstation und/oder -einheit mit ihrer räumlichen Behandlungs-Position kann durch den systemseitigen Anlernprozess einmalig und initial hergestellt werden. Beispielsweise kann als tracking-fähiges Gerät ein Smartphone mit UWB- oder BLE-Technologie verwendet werden, das mit der Vorrichtung kommuniziert und auf dem eine App ausgeführt wird, die den Nutzer durch den Anlernprozess führt. Der Nutzer kann beispielsweise, durch die App angeleitet, das Smartphone direkt vor die Trommelöffnung einer Waschmaschine, die eine Behandlungseinheit darstellt, halten, in der App die Positionserkennung durch die Vorrichtung auslösen, speichern und angeben, um welche Behandlungseinheit es sich handelt. Dabei erfasst die Vorrichtung die Geräte-Position des tracking-fähigen Geräts und weist diese der jeweils zu registrierenden Behandlungsstation- und/oder -einheit als Behandlungsposition zu. Danach kann der Nutzer mit weiteren Behandlungsstationen, -einheiten oder prozessrelevanten Behandlungs-Positionen im Innenraum ähnlich verfahren, bis die Behandlungs-Positionen aller relevanten Behandlungsstationen und/oder -einheiten im Prozess angelernt sind. Bevorzugt ist die Vorrichtung mit der mindestens einen Behandlungsstation und/oder -einheit vernetzt, um bidirektional und bevorzugt drahtlos mit dieser zu kommunizieren. Durch die Vernetzung der Vorrichtung mit der mindestens einen Behandlungsstation und/oder -einheit kann der Anlernprozess auch ohne die Interaktion des Nutzers und ohne eine dazugehörige App erfolgen. Das Tracking lässt sich auch außerhalb des Anlernprozesses im Regelbetrieb zusätzlich ergänzen und verbessern, indem wie im Anlernprozess, z.B. die Verweildauer des tracking-fähigen Objektes an dem jeweiligen Standort der mindestens einen Behandlungsstation oder -einheit mit der zeitgleichen Bedienung oder den zeitgleich übermittelten Betriebsdaten der jeweiligen Behandlungseinheit genutzt werden, um z.B. Informationen, welches tracking-fähige Objekt sich in welcher Behandlungsstation oder - einheit mit welchem Behandlungsprogramm wann behandelt wurde, zu protokollieren. Die Kommunikation zwischen dem Tracking-System und der mindestens einen Behandlungsstation und/oder -einheit kann über eine Schnittstelle z.B. WLAN, LAN, etc. erfolgen. In einer bevorzugten Ausführungsform ist das Tracking-System ausgebildet und eingerichtet, Betriebs- und / oder Zustandsdaten der mindestens einen Behandlungsstation und/oder Behandlungseinheit zu empfangen, mit dem Bewegungsprofil und/oder der Verweildauer des tracking-fähigen Objektes abzugleichen und aus dem Abgleich einen Maschinentyp der mindestens einen Behandlungsstation und/oder Behandlungseinheit abzuleiten und zuzuordnen. Aus dem Abgleich der Betriebs-/Zustandsdaten der mindestens einen Behandlungsstation und/oder Behandlungseinheit mit dem Bewegungsprofil der Tags kann zu der jeweiligen Objekt-Position im Innenraum, an der das tracking-fähige Objekt verweilt, ein Maschinentyp der Behandlungseinheit zugeordnet werden, der zeitgleich prozesstechnisch passende Betriebs-/Zustandsdaten übermittelt.

Wenn das tracking-fähige Objekt einen Behandlungsprozess durchläuft und die räumliche Behandlungs-Position und Art der darin beteiligten Behandlungsstationen -und/oder - einheiten anfänglich unbekannt ist, wird z.B. bei einem Wäschestück oder -posten als tracking-fähiges Objekt die Wäsche in mehreren Behandlungsstationen bzw. -einheiten behandelt z.B. zunächst in einer Waschmaschine gewaschen, danach in einem Wäschetrockner getrocknet, danach in einer Mangel gemangelt und anschließend in ein Regal eingelagert. Daher ändert sich die Objekt-Position der Wäsche als tracking-fähiges Objekt im Innenraum signifikant, wenn sie von einer Behandlungsstation bzw. -einheit zur nächsten befördert wird. Während die Wäsche an den jeweiligen Behandlungsstationen oder -einheiten behandelt wird, bleibt die Objekt-Position der Wäsche im Innenraum hingegen relativ konstant. Der Ausdruck "relativ" meint in dem Fall, dass sich durchaus ein durch die jeweilige Behandlungsstation bzw. -einheit bedingtes, charakteristisches, lokales Bewegungsmuster ergeben kann, welches als zusätzlicher Hinweis auf die stattfindende Behandlung der Wäsche genutzt werden kann. Im Fall einer Waschmaschine kann dies z.B. eine lokale, periodische räumliche Auslenkung der Wäsche sein, die für die Vorrichtung erkennbar ist. Dadurch kann die Vorrichtung auf die Behandlungs-Position der Waschmaschine als Behandlungsstation bzw. -einheit schließen.

Anhand des Bewegungs- und Verweilungsprofils und dem Abgleich mit den angelernten Behandlungs-Positionen der mindestens einen Behandlungsstationen bzw. -einheit im Innenraum kann die Vorrichtung bevorzugt auf die Behandlung der Objekte in den jeweiligen Bedienstationen und/oder -einheiten schließen. Dazu wird bevorzugt der Umstand vorteilhaft genutzt, dass die Funkkommunikation zwischen Tag und der Vorrichtung gestört sein kann, wenn sich das tracking-fähige Objekt in einer Behandlungsstation bzw. -einheit befindet und behandelt wird. Eine Störung und/oder Abschirmung des Signals ist durch den weitgehend metallischen Einschluss des tracking-fähigen Objektes in einer Behandlungseinheit wie einer Waschmaschine, Trockner usw. zu erwarten. Diese Störung kann von der Vorrichtung als Indikator für die Anwesenheit des tracking-fähigen Objektes innerhalb der an diesem Ort befindlichen Behandlungseinheit genutzt werden, um z.B. zu unterscheiden, ob ein Wäscheposten direkt vor der Trommelöffnung einer Waschmaschine geparkt wurde oder sich tatsächlich in der Trommel befindet, während ein Waschprogramm läuft. Bevorzugt ist das Tracking-System ausgebildet und eingerichtet, zu erkennen, ob ein an der mindestens einen Behandlungsstation und/oder -einheit ausgewähltes Behandlungsprogramm zu einer Behandlung des sich in ihr befindenden tracking-fähigen Objektes geeignet oder ungeeignet ist, und wenn sie erkennt, dass das ausgewählte Behandlungsprogramm zur Behandlung des tracking-fähigen Objektes ungeeignet ist, die mindestens eine Behandlungsstation und/oder - einheit veranlassen, ein Warnsignal auszugeben. Die Vernetzung der mindestens einen Behandlungsstation und/oder -einheit mit dem Tracking-System kann daher für die Erkennung genutzt werden, ob z.B. das ausgewählte Waschprogramm zu der Wäsche passt, mit der eine der Behandlungseinheiten beladen wurde. Ist dies nicht der Fall, kann die jeweilige Behandlungseinheit auf Basis der netzwerkseitig übermittelten Information von dem Tracking-System ein Warnsignal an den Nutzer ausgeben, bevor das ausgewählte Waschprogramm gestartet werden kann.

Bevorzugt weist das Tracking-System eine Vielzahl an Vorrichtungen nach einer oder mehreren der vorstehend beschriebenen Ausführungsformen auf, die miteinander vernetzt sind. Dadurch kann ggf. eine größere Genauigkeit bei der Positionsbestimmung und/oder eine weitreichendere Raumabdeckung erreicht werden.

Die Erfindung betrifft ferner ein Verfahren zum Nachverfolgen eines mittels elektromagnetischer Signale tracking-fähigen Objektes in einem Innenraum mit mindestens einer Behandlungsstation mit jeweils mindestens einer Behandlungseinheit, aufweisend folgende Schritte
- Erkennen eines tracking-fähigen Objektes in dem Innenraum mittels einer Vorrichtung, die extern von der mindestens einen Behandlungsstation und -einheit positioniert ist;
- zeitlich fortlaufendes Bestimmen einer Objekt-Position des tracking-fähigen Objektes in dem Innenraum mittels elektromagnetischer Signale durch die Vorrichtung; und
- Ableiten eines Bewegungsprofils, einer Verweildauer und / oder einer Behandlung des tracking-fähigen Objektes in der mindestens einen Behandlungsstation und/oder - einheit anhand der bestimmten Objekt-Position des tracking-fähigen Objektes in dem Innenraum und einer bekannten Behandlungs-Position der mindestens einen Behandlungsstation und/oder -einheit im Innenraum.

Bevorzugt wird die Objekt-Position dreidimensional bestimmt, und die bekannte Behandlungs-Position ist dreidimensional bekannt.

Bevorzugt weist das Verfahren weiterhin den Schritt des initialen Anlernens der Behandlungs-Position der mindestens einen Behandlungsstation und/oder -einheit im Innenraum auf. Das initiale Anlernen wird bevorzugt wie vorstehend beschrieben ausgeführt.

In einer bevorzugten Ausführungsform weist der Schritt des Anlernens der Behandlungs-Position der mindestens einen Behandlungsstation und/oder -einheit auf:
- Bestimmen einer Geräte-Position eines elektrischen tracking-fähigen Gerätes mittels elektromagnetischer Signale im Innenraum und Zuordnen der bestimmten Geräte-Position zu der mindestens einen Behandlungsstation und/oder -einheit mittels Nutzerinteraktion; oder
- Auswerten von Betriebs- und / oder Zustandsdaten der mindestens einen Behandlungsstation und/oder Behandlungseinheit und Abgleichen mit dem Bewegungsprofil und/oder der Verweildauer des tracking-fähigen Objektes der mindestens einen Behandlungsstation und/oder Behandlungseinheit und Ableiten der Behandlungs-Position und eines Maschinentyp der mindestens einen Behandlungsstation und/oder Behandlungseinheit und Zuordnen zu der abgeleiteten Behandlungs-Position.

Das Anlernen wird bevorzugt wie vorstehend beschrieben ausgeführt.

Ein Ausführungsbeispiel der Erfindung ist in den Zeichnungen rein schematisch dargestellt und wird nachfolgend näher beschrieben. Es zeigt schematisch und nicht maßstabsgerecht
- Fig. 1: ein Diagramm eines Tracking-Signals eines tracking-fähigen Objektes als Ortskurve in Abhängigkeit der Zeit;
- Fig. 2: eine skizzierte Darstellung eines Innenraums mit einem erfindungsgemäßen Tracking-System;
- Fig. 3: eine skizzierte Darstellung des in Fig. 2 gezeigten Innenraums mit dem erfindungsgemäßen Tracking-System, das ein erfindungsgemäßes Verfahren ausführt.

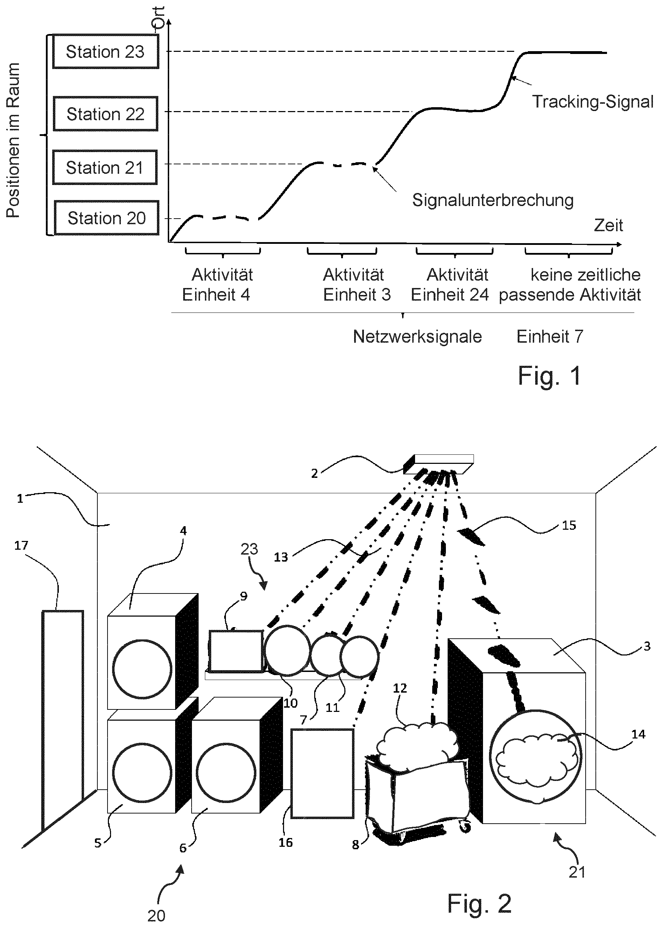

Fig. 1 zeigt ein Diagramm eines Tracking-Signals eines tracking-fähigen Objektes als Ortskurve in Abhängigkeit der Zeit. Das Tracking-Signal wird mittels einer Vorrichtung eines erfindungsgemäßen Tracking-Systems im Zuge der Ausführung eines erfindungsgemäßen Verfahrens erfasst.

Das Tracking-System (nicht gezeigt) ist zum räumlichen Nachverfolgen tracking-fähiger Objekte (nicht gezeigt) mittels elektromagnetischer Signale in einem Innenraum (nicht gezeigt) mit mindestens einer Behandlungsstation 20-23 aufweisend jeweils mindestens eine Behandlungseinheit 3,4,24,7 ausgebildet. Das Tracking-System weist eine Vorrichtung (nicht gezeigt) auf, die in dem Innenraum extern zu der mindestens einen Behandlungsstation 20-23 und der jeweiligen Behandlungseinheit 3,4,24,7 angeordnet und ausgebildet und eingerichtet ist, die Anwesenheit der tracking-fähigen Objekte im Innenraum mittels elektromagnetischer Signale zu erkennen und deren Objekt-Position räumlich zu bestimmen und anhand der bestimmten Objekt-Position und einer dem Tracking-System bekannten Behandlungs-Position der mindestens einen Behandlungsstation 20-23 und/oder -einheit 3,4,24,7 im Innenraum ein Bewegungsprofil, eine Verweildauer und/oder eine jeweilige Behandlung der tracking-fähigen Objekte in der mindestens einen Behandlungsstation 20-23 und/oder Behandlungseinheit 3,4,24,7 abzuleiten. Das Tracking-System führt ein erfindungsgemäßes Verfahren aus, aufweisend folgende Schritte
- Erkennen eines tracking-fähigen Objektes in dem Innenraum mittels der Vorrichtung, die extern von der mindestens einen Behandlungsstation 20-23 und -einheit 3,4,24,7 positioniert ist;
- zeitlich fortlaufendes Bestimmen einer Objekt-Position des tracking-fähigen Objektes in dem Innenraum mittels elektromagnetischer Signale durch die Vorrichtung; und
- Ableiten eines Bewegungsprofils, einer Verweildauer und / oder einer Behandlung des tracking-fähigen Objektes in der mindestens einen Behandlungsstation 20-23 und/oder -einheit 3,4,24,7 anhand der bestimmten Objekt-Position des tracking-fähigen Objektes in dem Innenraum und einer bekannten Position der mindestens einen Behandlungsstation 20-23 und/oder -einheit 3,4,24,7 im Innenraum 1.

Der jeweilige Ort bzw. die Behandlungs-Position der Behandlungsstationen, die in Fig. 1 als Stationen 20-23 bezeichnet sind und die eine der Behandlungseinheiten, die als Einheit 4 in Form einer Waschmaschine, als Einheit 3 in Form eines Trockners, als Einheit 24 in Form einer Mangel und als Einheit 7 in Form eines Regals bezeichnet sind, aufweisen, ist in Fig. 1 zur Veranschaulichung auf eine Dimension reduziert. In der Realität wird in dem Verfahren mit einer Trajektorie in einem dreidimensionalen Raum als Funktion der Zeit operiert. An der Ortsachse sind die Positionen gekennzeichnet, an denen keine oder im Mittel keine Ortsveränderung des tracking-fähigen Objekt z.B. Wäsche stattfindet. Diese charakteristischen Objekt-Positionen werden für das Tracking-System aus den entsprechenden Plateaus in der mittels des Verfahrens ermittelten Tracking-Kurve abgeleitet, so dass sie von dem Tracking-System als potenzielle Behandlungsstationen 20-23 oder ihre jeweilige Einheit 3,4,24,7 erkannt werden, an denen das tracking-fähige Objekt behandelt z.B. gewaschen oder gelagert wird. An der Zeitachse sind zum einen Zeiträume gekennzeichnet, in denen Netzwerksignale durch die Behandlungseinheiten 3,4,7,24 gesendet werden. Zum anderen ist beim letzten Plateau bei Station 40 gesondert gekennzeichnet, dass in dem Zeitraum keine zeitgleich passende Aktivität signalisiert wird, die auf eine Behandlung mittels einer elektrisch betriebenen Behandlungseinheit hindeutet. Die zeitliche Korrelation der Netzwerksignale mit den Plateaus der Tracking-Kurve ermöglicht die Zuordnung der jeweiligen Station 20-23 zur jeweiligen Behandlungseinheit 3,4,24,7. d.h. Station 20 zur Einheit 4 = Waschmaschine, Station 21 zur Einheit 3 = Trockner, Station 22 zur Einheit 24 = Mangel und Station 23 zur Einheit 7 = Regal. Insbesondere können hierbei übertragene Zustandsänderungen der Behandlungseinheiten 3,4,24, wie z.B. ein Programmstart oder ein Öffnen und/oder Schließen eine Zuordnung der Behandlungseinheiten 3,4,24 zu Behandlungs-Positionen im Innenraum erhöhen. Somit kann ein initialer Anlernprozess des Tracking-Systems in dem Verfahren ohne zusätzlichen Handlungsbedarf des Nutzers automatisiert erfolgen, um die Behandlungs-Position zu bestimmen, so dass die Behandlungs-Position bei der weiteren Nutzung des Verfahrens bekannt ist.

Während das tracking-fähige Objekt in dem Innenraum, in dem sich die mindestens eine Vorrichtung des Tracking-Systems befindet, in dem Behandlungsprozess gereinigt, aufbereitet und/oder gelagert wird, werden seine Objekt-Positionen in dem Innenraum von dem Tracking-System nachverfolgt. Anhand des Bewegungs- und Verweilungsprofils und dem Abgleich mit den angelernten Behandlungs-Positionen der Behandlungsstationen 20-23 und -einheiten 3,4,24,7 in dem Innenraum kann das Tracking-System auf die Behandlung der Objekte in den jeweiligen Behandlungsstationen 20-23 und -einheiten 3,4,24,7 schließen. Dabei kann insbesondere der Umstand vorteilhaft genutzt werden, dass die Funkkommunikation zwischen Tags und der oder den Vorrichtungen des Tracking-Systems gestört wird, wenn sich die tracking-fähigen Objekte in den jeweiligen Behandlungsstationen 20-23 und -einheiten 3,4,24,7 befinden. Eine Störung/Abschirmung des Signals ist durch den weitgehend metallischen Einschluss des tracking-fähigen Objektes in der Behandlungseinheit 3,4 zu erwarten. Diese Störung kann von dem Tracking System als Indikator für die Anwesenheit des tracking-fähigen Objektes innerhalb der an diesem Ort befindlichen Behandlungsstation 20, 21 oder -einheit 3,4 genutzt werden, um z.B. zu unterscheiden, ob ein Wäscheposten als tracking-fähiges Objekt direkt vor der Trommelöffnung einer Waschmaschine als Behandlungseinheit geparkt wurde oder sich tatsächlich in der Trommel befindet, während ein Waschprogramm läuft. Entsprechende Signalunterbrechungen sind in dem Diagramm ebenfalls dargestellt. In dem Fall wurde angenommen, dass das Signal gestört wird, wenn die Wäsche in einer Waschmaschinen- bzw. Trocknertrommel behandelt wird, jedoch nicht gestört wird, wenn die Wäsche gemangelt oder gelagert wird. Fig. 2 zeigt eine skizzierte Darstellung eines erfindungsgemäßen Tracking-System in einem Innenraum. Das Tracking-System ist mit dem zu Fig. 1 beschriebenen Tracking-System identisch ausgebildet.

In Fig. 2 ist ein Innenraum 1 dargestellt mit einem Tracking-System mit einer Vorrichtung 2 als lokale Tracking-Einheit, die in dem Fall an der Decke des Innenraums 1 befestigt ist. In dem Innenraum 1 befinden sich Behandlungsstationen in Form von Stationen 20, 21, 23. Die Behandlungsstation 20 weist Behandlungseinheiten 4, 5, 6 jeweils in Form einer Waschmaschine auf, die Behandlungsstation 21 weist eine Behandlungseinheit 3 in Form eines Trockners und die Behandlungsstation 23 weist eine Behandlungseinheit 7 in Form eines Regals auf und kann eine Behandlungseinheit 8 in Form eines Wagens aufweisen, die jedoch alternativ als tracking-fähiges Objekt 8 ausgebildet sein kann. Die Behandlungseinheiten 3-7 sind stationär angeordnet, während die Behandlungseinheit 8 z.B. als Wäschewagen zum Transportieren des tracking-fähigen Objektes 12 beweglich ausgebildet ist. Die Behandlungseinheiten 3-8 dienen der Behandlung von tracking-fähigen Objekten 9-12, 14 ohne dass sie selbst über Tracking-Technologie verfügen. Die Behandlungseinheit 7 dient zur temporären Lagerung von tracking-fähigen Objekten z.B. 9-11, wobei das tracking-fähige Objekt 9 z.B. Handtücher, das tracking-fähige Objekt 10 z.B. einen Feuerwehrhelm und das tracking-fähige Objekt 11 z.B. Feuerwehrhandschuhe darstellt. Das Regal ist hierbei repräsentativ für diverse Arten von Lagerungsvorrichtungen und verfügt selbst ebenfalls über keine Tracking-Technologie. Die Behandlungseinheit 8 repräsentiert eine Vorrichtung, in denen die tracking-fähigen Objekte wie das tracking-fähige Objekt 12 in Form von Wäsche transportiert werden können. Aufgrund ihres mobilen Charakters kann die Behandlungseinheit 8 alternativ selbst einen Tag enthalten und somit ein tracking-fähiges Objekt darstellen. Durch das entsprechend zeitgleich identische Bewegungsprofil der Behandlungseinheit 8 und des darin enthaltenen tracking-fähigen Objektes in Form der Wäsche kann die Vorrichtung 2 relativ einfach auf den Transport des tracking-fähigen Objektes 12 in der Behandlungseinheit 8 inkl. Zeitpunkten, Verweildauern, etc. schließen. Die Funk-Kommunikation der Vorrichtung 2 mit den zu trackenden Objekten 9-12 ist in der Fig. 2 durch Strahlen 13 dargestellt. Eine Besonderheit stellt dabei der Strahl 13 zwischen der Vorrichtung 2 und dem tracking-fähigen Objekt 14 in Form von Wäsche 14 dar, die sich in der Behandlungseinheit 3 befindet. Dieser Strahl 13 enthält zusätzliche Symbole 15, die Störungen darstellen. Die Störungen kommen in dem Fall durch den teilweisen oder vollständigen Einschluss des tracking-fähigen Objektes 14 innerhalb der weitestgehend metallischen Behandlungseinheit 3 in Form des Trockners zustande. Die Störungen könnten von dem Tracking-System vorteilhaft genutzt werden, indem sie insbesondere mit der Behandlung des tracking-förmigen Objektes 14 innerhalb des Trockners assoziiert werden. Das Verschwinden und Auftauchen des Signals des tracking-fähigen Objektes 14 am Ort einer der Behandlungseinheiten 3-8 ist dafür ein charakteristischer Indikator. Neben der Behandlungseinheit 8, die als bewegliches, tracking-fähiges Objekt ausgebildet sein kann, befindet sich zudem eine Behandlungseinheit 16 in Form eines Kanisters in dem Innenraum 1, der z.B. Flüssigwaschmittel für die Behandlungseinheiten 4,5,6 enthält und alternativ als tracking-fähiges Objekt ausgebildet sein kann. Die Behandlungseinheit 16 kann ebenfalls einen Tracking-Tag enthalten und von der Tracking-Einheit lokalisierbar bzw. in dem Innenraum 1 nachverfolgbar sein. Dies ist insbesondere dann nützlich, wenn der Kanister den Innenraum 1 durch z.B. den dargestellten Raumdurchgang 17 verlässt oder in den Innenraum 1 eingebracht wird.

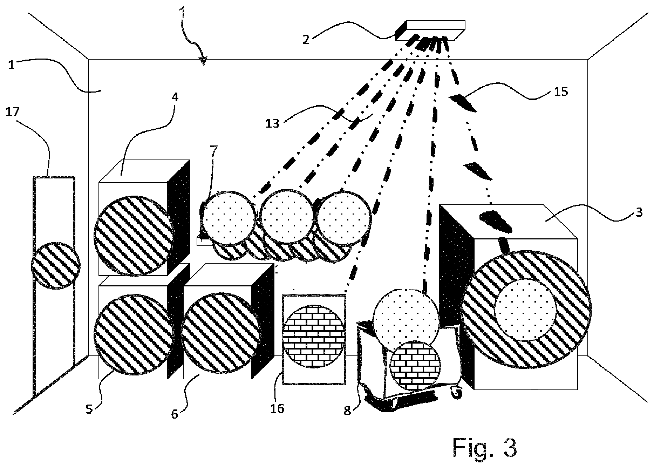

Fig. 3 zeigt eine skizzierte Darstellung des in Fig. 2 gezeigten Innenraums mit dem erfindungsgemäßen Tracking-System, das ein erfindungsgemäßes Verfahren ausführt. Das Verfahren ist zu dem identisch, das zu Fig. 1 beschrieben ist.

In Fig. 3 ist der Innenraum 1 dargestellt, allerdings überlagert mit Kreisen, die sich auf die jeweiligen Positionen der verschiedenen Objekte und Behandlungsstationen- und -einheiten 3-7 im Innenraum beziehen. Die punktierten Kreise beziehen sich auf Objekt-Positionen der tracking-fähigen Objekte (nicht gezeigt). Die gekachelten Kreise beziehen sich auf Positionen der Behandlungseinheiten 8, 16, die alternativ als tracking-fähiges Objekt ausgebildet sein können. Die schräg schraffierten Kreise beziehen sich auf Behandlungs-Positionen der stationären Behandlungseinheiten 3-7, die selbst keine Tracking-Tags enthalten und deren Position im Tracking-System, wie vorstehend zu Fig. 1 und 2 beschrieben, angelernt wurde. Bezogen auf die zu Fig. 1 beschriebene Tracking-Kurve, entsprechen die schräg schraffierten Kreise Gebieten in dem Innenraum 1, an denen ein Wäscheposten als tracking-fähiges Objekt verbleibt, während die dazugehörige Behandlungseinheit, in dem Fall der Fig. 3 die Behandlungseinheit 3 entsprechende Netzwerksignale übermittelt, die sich aus dem dazugehörigen Prozess ergeben. Die Lagerung der tracking-fähigen Objekte in der Behandlungseinheit 7 ist hingegen durch eine längere Verweildauer ohne dazugehörige Netzwerksignale erkennbar. Die dem Tracking-System einmalig angelernten Behandlungs-Positionen der Behandlungseinheiten 3-7 in dem Innenraum 1 können vorteilhaft mit den Objekt-Positionen der beweglichen tracking-fähigen Objekte, ggf. 8, 16 in Verbindung gebracht werden, um auf den Verlauf der tracking-fähigen Objekte im z.B. Wäschepflegeprozess zurückzuschließen.

### Bezugszeichenliste

- 1: Innenraum
- 2: Vorrichtung
- 3-7: Behandlungseinheiten
- 8: Behandlungseinheit oder tracking-fähiges Objekt
- 9-12: tracking-fähige Objekte
- 13: elektromagnetische Signale
- 14: tracking-fähiges Objekt
- 15: Symbol
- 16: Behandlungseinheit oder tracking-fähiges Objekt
- 17: Raumdurchgang
- 20-23: Behandlungsstationen
- 24: Behandlungseinheit

## Patentansprüche

1. Tracking-System zum räumlichen Nachverfolgen tracking-fähiger Objekte (9-12, 14) mittels elektromagnetischer Signale in einem Innenraum (1) mit mindestens einer Behandlungsstation (20-23) aufweisend jeweils mindestens eine Behandlungseinheit (3-8, 16), wobei das System eine Vorrichtung (2) aufweist, die in dem Innenraum (1) extern zu der mindestens einen Behandlungsstation (20-23) und der mindestens einen Behandlungseinheit (3-8, 16) angeordnet und ausgebildet und eingerichtet ist, die Anwesenheit der tracking-fähigen Objekte (9-12, 14) im Innenraum (1) mittels elektromagnetischer Signale zu erkennen und deren Objekt-Position räumlich zu bestimmen und anhand der bestimmten Objekt-Position und einer dem Tracking-System bekannten Behandlungs-Position der mindestens einen Behandlungsstation (20-23) und/oder -einheit (3-8, 16) im Innenraum (1) ein Bewegungsprofil, eine Verweildauer und/oder eine jeweilige Behandlung der tracking-fähigen Objekte (9-12, 14) in der mindestens einen Behandlungsstation (20-23) und/oder Behandlungseinheit (3-8, 16) abzuleiten, **dadurch gekennzeichnet, dass** das Tracking-System ausgebildet und eingerichtet ist, Betriebs- und / oder Zustandsdaten der mindestens einen Behandlungsstation (20-23) und/oder Behandlungseinheit (3-8, 16) zu empfangen, und auszuwerten, mit dem Bewegungsprofil und/oder der Verweildauer des tracking-fähigen Objektes abzugleichen und aus dem Abgleich einen Maschinentyp der mindestens einen Behandlungsstation (20-23) und/oder Behandlungseinheit (3-8, 16) abzuleiten und zuzuordnen.

2. Tracking-System nach Anspruch 1, **dadurch gekennzeichnet, dass** das Tracking-System mit der Vorrichtung ausgebildet und eingerichtet ist, die Behandlungs-Position der mindestens einen Behandlungsstation und/oder -einheit im Innenraum initial zu erlernen, wobei die Vorrichtung die Behandlungs-Position über ein tracking-fähiges Gerät ausliest, das im Bereich der mindestens einen Behandlungsstation und -einheit positioniert ist.

3. Tracking-System nach einem der vorangehenden Ansprüche, **dadurch gekennzeichnet, dass** die Vorrichtung (2) mit der mindestens einen Behandlungsstation (20-23) und/oder -einheit (3-8, 16) vernetzt ist, um bidirektional und bevorzugt drahtlos mit dieser zu kommunizieren.

4. Tracking-System nach einem der Ansprüche 1 bis 3, **dadurch gekennzeichnet, dass** das Tracking-System ausgebildet und eingerichtet ist, zu erkennen, ob ein an der mindestens eine Behandlungsstation und/oder -einheit ausgewähltes Behandlungsprogramm zu einer Behandlung des sich in ihr befindenden tracking-fähigen Objektes geeignet oder ungeeignet ist, und wenn sie erkennt, dass das ausgewählte Behandlungsprogramm zur Behandlung des tracking-fähigen Objektes ungeeignet ist, die mindestens eine Behandlungsstation und/oder -einheit zu veranlassen, ein Warnsignal auszugeben.

5. Tracking-System, aufweisend eine Vielzahl an Vorrichtungen (2) nach einem der vorangehenden Ansprüche, die miteinander vernetzt sind.

6. Verfahren zum Nachverfolgen eines mittels elektromagnetischer Signale tracking-fähigen Objektes (9-12, 14) in einem Innenraum (1) mit mindestens einer Behandlungsstation (20-23) mit jeweils mindestens einer Behandlungseinheit (3-8, 16), aufweisend folgende Schritte
- Erkennen eines tracking-fähigen Objektes (9-12, 14) in dem Innenraum (1) mittels einer Vorrichtung (2), die extern von der mindestens einen Behandlungsstation (20-23) und -einheit (3-8, 16) positioniert ist;
- zeitlich fortlaufendes Bestimmen einer Objekt-Position des tracking-fähigen Objektes (9-12, 14) in dem Innenraum (1) mittels elektromagnetischer Signale durch die Vorrichtung (2); und
- Ableiten eines Bewegungsprofils, einer Verweildauer und / oder einer Behandlung des tracking-fähigen Objektes (9-12, 14) in der mindestens einen Behandlungsstation (20-23) und/oder -einheit (3-8, 16) anhand der bestimmten Objekt-Position des tracking-fähigen Objektes (9-12, 14) in dem Innenraum und einer bekannten Position der mindestens einen Behandlungsstation (20-23) und/oder -einheit (3-8, 16) im Innenraum (1),
**gekennzeichnet durch** ein initiales Anlernen der Behandlungs-Position der mindestens einen Behandlungsstation (20-23) und/oder -einheit (3-8, 16) im Innenraum, aufweisend:
- Bestimmen einer Geräte-Position eines elektrischen tracking-fähigen Gerätes mittels elektromagnetischer Signale im Innenraum und Zuordnen der bestimmten Geräte-Position zu der mindestens einen Behandlungsstation und/oder -einheit mittels Nutzerinteraktion; und
- Auswerten von Betriebs- und / oder Zustandsdaten der mindestens einen Behandlungsstation (20-23) und/oder Behandlungseinheit (3-8, 16) und Abgleichen mit dem Bewegungsprofil und/oder der Verweildauer des tracking-fähigen Objektes (9-12, 14) der mindestens einen Behandlungsstation (20-23) und/oder Behandlungseinheit (3-8, 16) und Ableiten der Behandlungs-Position und eines Maschinentyp der mindestens einen Behandlungsstation (20-23) und/oder Behandlungseinheit (3-8, 16) und Zuordnen zu der abgeleiteten Behandlungsposition.

## Claims

1. Tracking system for spatially tracking trackable objects (9-12, 14) by means of electromagnetic signals in an interior (1) having at least one treatment station (20-23), each treatment station comprising at least one treatment unit (3-8, 16), the system comprising a device (2) which is arranged in the interior (1) externally to the at least one treatment station (20-23) and the at least one treatment unit (3-8, 16) and is designed and configured to identify the presence of the trackable objects (9-12, 14) in the interior (1) by means of electromagnetic signals and to spatially determine their object position and, on the basis of the determined object position and a treatment position of the at least one treatment station (20-23) and/or treatment unit (3-8, 16) in the interior (1) known to the tracking system, to derive a movement profile, a dwell time and/or a particular treatment of the trackable objects (9-12, 14) in the at least one treatment station (20-23) and/or treatment unit (3-8, 16), **characterised in that** the tracking system is designed and configured to receive and evaluate operational and/or status data of the at least one treatment station (20-23) and/or treatment unit (3-8, 16), to compare these data with the movement profile and/or dwell time of the trackable object, and to derive and assign a machine type to the at least one treatment station (20-23) and/or treatment unit (3-8, 16) from the comparison.

2. Tracking system according to claim 1, **characterised in that** the tracking system, using the device, is designed and configured to initially learn the treatment position of the at least one treatment station and/or treatment unit in the interior, the device reading the treatment position via a trackable appliance which is positioned in the region of the at least one treatment station and treatment unit.

3. Tracking system according to either of the preceding claims, **characterised in that** the device (2) is interconnected with the at least one treatment station (20-23) and/or treatment unit (3-8, 16) in order to communicate bidirectionally and preferably wirelessly with said station and/or unit.

4. Tracking system according to any of claims 1 to 3, **characterised in that** the tracking system is designed and configured to identify whether a treatment program selected at the at least one treatment station and/or treatment unit is suitable or unsuitable for treating the trackable object located therein and, if it identifies that the selected treatment program is unsuitable for treating the trackable object, to cause the at least one treatment station and/or treatment unit to issue a warning signal.

5. Tracking system comprising a plurality of devices (2) according to any of the preceding claims, which are interconnected.

6. Method for tracking an object (9-12, 14) which is trackable by means of electromagnetic signals in an interior (1) having at least one treatment station (20-23), each treatment station having at least one treatment unit (3-8, 16), comprising the following steps
- identifying a trackable object (9-12, 14) in the interior (1) by means of a device (2) which is positioned externally of the at least one treatment station (20-23) and treatment unit (3-8, 16);
- continuously determining an object position of the trackable object (9-12, 14) in the interior (1) by means of electromagnetic signals using the device (2); and
- deriving a movement profile, a dwell time and/or a treatment of the trackable object (9-12, 14) in the at least one treatment station (20-23) and/or treatment unit (3-8, 16) on the basis of the determined object position of the trackable object (9-12, 14) in the interior and a known position of the at least one treatment station (20-23) and/or treatment unit (3-8, 16) in the interior (1),
**characterised by** initially training the treatment position of the at least one treatment station (20-23) and/or treatment unit (3-8, 16) in the interior, comprising the steps of:
- determining an appliance position of an electrically trackable appliance by means of electromagnetic signals in the interior and assigning the determined appliance position to the at least one treatment station and/or treatment unit by means of user interaction; and
- evaluating operational and/or status data of the at least one treatment station (20-23) and/or treatment unit (3-8, 16) and comparing these data with the movement profile and/or the dwell time of the trackable object (9-12, 14) of the at least one treatment station (20-23) and/or treatment unit (3-8, 16) and deriving the treatment position and a machine type of the at least one treatment station (20-23) and/or treatment unit (3-8, 16) and assigning the machine type to the derived treatment position.

## Revendications

1. Système de suivi pour la poursuite spatiale d'objets (9-12, 14) aptes à être suivis par le biais de signaux électromagnétiques dans un espace intérieur (1) comportant au moins une station de traitement (20-23) présentant respectivement au moins une unité de traitement (3-8, 16), dans lequel le système présente un dispositif (2) qui est agencé dans l'espace intérieur (1) à l'extérieur de l'au moins une station de traitement (20-23) et de l'au moins une unité de traitement (3-8, 16) et est équipé et conçu pour reconnaître la présence des objets (9-12, 14) aptes à être suivis dans l'espace intérieur (1) par le biais de signaux électromagnétiques et pour déterminer dans l'espace leur position d'objet et, à l'aide de la position d'objet déterminée et d'une position de traitement connue du système de suivi de l'au moins une station de traitement (20-23) et/ou unité de traitement (3-8, 16) dans l'espace intérieur (1), pour dériver un profil de mouvement, une durée de séjour et/ou un traitement respectif des objets (9-12, 14) aptes à être suivis dans l'au moins une station de traitement (20-23) et/ou unité de traitement (3-8, 16), **caractérisé en ce que** le système de suivi est équipé et conçu pour recevoir des données de fonctionnement et/ou d'état de l'au moins une station de traitement (20-23) et/ou unité de traitement (3-8, 16), et pour les évaluer, pour les comparer au profil de mouvement et/ou à la durée de séjour de l'objet apte à être suivi, et pour dériver et associer à partir de la comparaison un type de machine de l'au moins une station de traitement (20-23) et/ou unité de traitement (3-8, 16).

2. Système de suivi selon la revendication 1, **caractérisé en ce que** le système de suivi comportant le dispositif est équipé et conçu pour apprendre initialement la position de traitement de l'au moins une station et/ou unité de traitement dans l'espace intérieur, dans lequel le dispositif lit la position de traitement par l'intermédiaire d'un appareil apte à effectuer un suivi, qui est positionné dans la zone de l'au moins une station et unité de traitement.

3. Système de suivi selon l'une des revendications précédentes, **caractérisé en ce que** le dispositif (2) est mis en réseau avec l'au moins une station de traitement (20-23) et/ou unité de traitement (3-8, 16) afin de communiquer de manière bidirectionnelle et de préférence sans fil avec celle-ci.

4. Système de suivi selon l'une quelconque des revendications 1 à 3, **caractérisé en ce que** le système de suivi est équipé et conçu pour reconnaître si un programme de traitement sélectionné au niveau de l'au moins une station et/ou unité de traitement est approprié ou inapproprié pour un traitement de l'objet apte à être suivi qui s'y trouve et, lorsqu'il reconnaît que le programme de traitement sélectionné est inapproprié pour le traitement de l'objet apte à être suivi, pour amener l'au moins une station et/ou unité de traitement à émettre un signal d'avertissement.

5. Système de suivi, présentant une pluralité de dispositifs (2) selon l'une des revendications précédentes, qui sont mis en réseau les uns avec les autres.

6. Procédé de poursuite d'un objet (9-12, 14) apte à être suivi par le biais de signaux électromagnétiques dans un espace intérieur (1) comportant au moins une station de traitement (20-23) comportant respectivement au moins une unité de traitement (3-8, 16), présentant les étapes suivantes
- reconnaissance d'un objet (9-12, 14) apte à être suivi dans l'espace intérieur (1) par le biais d'un dispositif (2) positionné à l'extérieur de l'au moins une station de traitement (20-23) et unité de traitement (3-8, 16) ;
- détermination continue dans le temps d'une position d'objet de l'objet (9-12, 14) apte à être suivi dans l'espace intérieur (1) par le biais de signaux électromagnétiques par le dispositif (2) ; et
- dérivation d'un profil de mouvement, d'une durée de séjour et/ou d'un traitement de l'objet (9-12, 14) apte à être suivi dans l'au moins une station de traitement (20-23) et/ou unité de traitement (3-8, 16) à l'aide de la position d'objet déterminée de l'objet (9-12, 14) apte à être suivi dans l'espace intérieur et d'une position connue de l'au moins une station de traitement (20-23) et/ou unité de traitement (3-8, 16) dans l'espace intérieur (1),
**caractérisé par** un apprentissage initial de la position de traitement de l'au moins une station de traitement (20-23) et/ou unité de traitement (3-8, 16) dans l'espace intérieur, présentant :
- la détermination d'une position d'appareil d'un appareil électrique apte à effectuer un suivi par le biais de signaux électromagnétiques dans l'espace intérieur et association de la position d'appareil déterminée à l'au moins une station et/ou unité de traitement par le biais d'une interaction avec l'utilisateur ; et
- évaluation de données de fonctionnement et/ou d'état de l'au moins une station de traitement (20-23) et/ou unité de traitement (3-8, 16) et comparaison de celles-ci au profil de mouvement et/ou à la durée de séjour de l'objet (9-12, 14) apte à être suivi de l'au moins une station de traitement (20-23) et/ou unité de traitement (3-8, 16) et dérivation de la position de traitement et d'un type de machine de l'au moins une station de traitement (20-23) et/ou unité de traitement (3-8, 16) et association à la position de traitement dérivée.
